# EUROPÄISCHE PATENTSCHRIFT

(11) **EP 1 261 506 B1**
(45) Veröffentlichungstag und Bekanntmachung des Hinweises auf die Patenterteilung: **03.12.2003**
(21) Anmeldenummer: 00979521.2
(22) Anmeldetag: 28.10.2000
(51) Int. Cl.: B60N 2/22

(54) **Verstellbeschlag für die Rückenlehne von Fahrzeugsitzen, insbesondere von Kraftfahrzeugsitzen**
Adjusting Armature for the Back Rests of Vehicle Seats, especially Motot Vehicle Seats
Ferrure de réglage destinée au dossier de sièges de véhicules, notamment de sièges de véhicules automobile

(30) Priorität: 09.11.1999 DE 19953686
(43) Veröffentlichungstag der Anmeldung: 04.12.2002
(73) Patentinhaber: KEIPER GmbH & Co. KG, 67657 Kaiserslautern (DE)
(72) Erfinder: ARRENBERG, Jürgen, 42285 Wuppertal (DE); FRANZMANN, Thomas, 67663 Kaiserslautern (DE); LABUWY, Cornel, 42857 Remscheid (DE)
(74) Vertreter: Ludewig, Karlheinrich, Dipl.-Ing.
(86) Internationale Anmeldenummer: EP0010643
(87) Internationale Veröffentlichungsnummer: WO01034425

(56) Entgegenhaltungen:
- EP-A- 0 937 603
- EP-A- 1 046 537
- US-A- 3 788 685
- US-A- 4 358 155
- US-A- 4 521 055

## Beschreibung

Die Erfindung betrifft einen Verstellbeschlag für die Rückenlehne von Fahrzeugsitzen, insbesondere von Kraftfahrzeugsitzen, wobei die gegebenenfalls in ihrer Neigungslage mittels einer Stelleinrichtung um eine erste Drehachse ein- und feststellbare Rückenlehne um eine zweite, mit Abstand zur ersten Drehachse angeordnete, externe Drehachse vor- und rückklappbar ist, und in ihrer Rückklapplage an einer am Sitz ortsfest angeordneten Riegelaufnahme mittels eines in diese lösbar eingreifenden und an einer mitklappenden Drehlasche axial verschiebbar gehalterten und in Sperrichtung federbeaufschlagten Riegelzapfens gesichert und mit einer Anschlagaufnahme an einem am Sitz ortsfest angeordneten Anschlagbolzen abgestützt ist.

Eine ähnliche Vorrichtung ist in der EP 0 937 603 A 1 gezeigt. Bei dieser Entgegenhaltung ist ein Verstellbeschlag für Rückenlehnen von Kraftfahrzeugsitzen gezeigt, bei dem einerseits die Rückenlehne in ihrer Neigung um eine Achse einstellbar ist und andererseits um eine andere Achse klappbar ist. Hierbei ist eine Verriegelung in der aufrechten Stellung der Rückenlehne über einen federbelasteten bzw. konusförmiges Ende aufnehmenden Zapfen möglich, der federnd in eine entsprechende Aufnahme eingreift. Eine Spielfreiheit wird nicht in allen Richtungen gewährleistet.

Bei einem aus der nicht vorveröffentlichten Patentanmeldung DE-A-199 18 737.1-16 der Anmelderin ersichtlichen Verstellbeschlag der vorgenannten Art (s. auch die entsprechende, nicht vorveröffentlichte EP-A-1 046 537) ist der die Einstellung und Feststellung der Rückenlehnenneigung bewirkenden Beschlagkomponente mit einer ersten Drehachse eine weitere Beschlagkomponente mit einer zweiten Drehachse nebengeordnet. Um die Rückenlehne in eine als Tischfunktionslage geeignete Vorklapplage überführen zu können, ist die zweite Drehachse mit Abstand oberhalb der ersten Drehachse angeordnet. Dazu ist in der Regel am Sitzteilrahmen oder an einem mit diesem fest verbundenen Riegelblech ein Beschlagteil, der die Rückenlehnenneigung in die Gebrauchslage für den Sitzbenutzer ermöglichenden Beschlagkomponente mittels einem Anschlagbolzen und einem in Sperrichtung axial verschiebbaren und durch einen Kraftspeicher belasteten Riegelzapfen lösbar festgelegt. Außerdem ist mit dem Sitzteilrahmen oder dem Riegelblech eine nach oben aufragende und über die erste Drehachse hinausgehende Lagerlasche der zweiten Beschlagkomponente fest verbunden. Diese Lagerlasche ist in ihrem oberen Bereich mittels eines Achsbolzens mit einer Drehlasche zu einem Gelenk verbunden, welches die zweite Drehachse des Verstellbeschlages bildet. Die Drehlasche ist zusammen mit dem am Sitzteil mittels Anschlagbolzen und Riegelzapfen lösbar festgelegten Beschlagteil verbunden, und mit diesem verschwenkbar. Infolge der höhergelegten, zweiten Drehachse läßt sich die Rückenlehne über der Polsterung des Sitzteiles derart in einer Tischfunktionslage platzieren, daß die Rückseite der Rückenlehne eine waagerechte Ebene bildet, ohne daß die Polsterung der Rückenlehne und des Sitzteiles dem entgegenwirkt. Zur Sicherung dieser Tischfunktionslage ist zwischen die Drehachse und die Lagerlasche eine Gasdruckfeder geschaltet. Der axial verschiebbare Riegelzapfen weist bei dieser vorbekannten Lösung einen Kreisquerschnitt auf und greift im Verriegelungsfall in eine dazu passende Bohrung ein, die jedoch wegen unvermeidlicher Toleranzen geringfügig größer sein muß als der Durchmesser des Riegelzapfens. Aufgrund dieses unumgänglichen Spieles läßt sich ein Klappern nicht vermeiden, wenn der Fahrbetrieb auf unebenem Untergrund erfolgt.

Aufgabe der Erfindung ist es, einen Verstellbeschlag der eingangs genannten Art dahingehend zu verbessern, daß eine spieleliminierende Verspannung der Drehlasche gegenüber dem Riegelblech ermöglicht wird. Diese Aufgabe wird mit den im Kennzeichen des Patentanspruches 1 genannten Merkmalen gelöst. Indem dem axial verschiebbaren Riegelzapfen eine Drehbewegung in der Weise überlagert ist, daß sein Sperrabschnitt mit einer radial veränderlichen Stützkurve sich infolge der Federbeaufschlagung selbsttätig an einer ebenen Stützfläche der Riegelaufnahme nachstellt, wird eine spielbeseitigende Verspannung im Verriegelungsfall erzielt, so daß der Verstellbeschlag unabhängig von seinen unvermeidlichen Toleranzen klapperfrei bleibt. Zur Bildung der radial veränderlichen Stützkurve in Verbindung mit einer diese kontaktierenden Stützfläche weist der Sperrabschnitt des Ringzapfens einen solchen Umfang auf, der über einen Teilbereich von etwa 180° mit konstantem Radius verläuft, an den ein Umfangsbereich von etwa 90° anschließt, in welchem die Stützkurve verläuft, die ausgehend vom konstanten Radius einen ständig kleiner werdenden Radialabstand vom Zentrum des Riegelzapfens aufweist, um danach in wenigstens einen ebenen Bereich überzugehen, der sich dann schließlich an den vorerwähnten Teilbereich mit konstantem Radius wieder anschließt. Die Riegelaufnahme weist neben einem Kreisumfangsbereich eine mit der Stützkurve in Kontakt bringbare Stützfläche auf. Die einen ständig kleiner werdenden Radialabstand vom Zentrum des Riegelzapfens aufweisende Stützkurve läßt sich als logarithmische Spirale gestalten, durch welche sich Fertigungstoleranzen und Spiele überbrücken lassen, die das durch die Stützkurve sich ergebende Nachstellmaß nicht erreichen und innerhalb der Toleranzen liegen.

Zur Axialführung des Riegelzapfens und einer aus seiner Axialbewegung abgeleiteten überlagerten Drehbewegung ist der Führungsabschnitt des Riegelzapfens nach einem Ausgestaltungsmerkmal der Erfindung in einer an der Drehlasche festgelegten Büchse axial verschiebbar angeordnet, und greift mit wenigstens einem Kulissenstein in wenigstens eine gewindeartig verlaufende Kulisse der Büchse ein. Dabei ist diese Büchse vorteilhaft von einer Auslösehülse umgriffen, die wenigstens eine in axialer Richtung ansteigend verlaufende Führungsnut aufweist, deren Steigung größer ist als die Steigung der gewindeartig verlaufenden Kulisse in der Büchse, die ihrerseits vom Kulissenstein durchgriffen ist und der seinerseits in die Führungsnut der Auslösehülse eingreift.

Damit eine möglicherweise durch Verkantungen auftretende Funktionsstörung ausgeschlossen ist, sind nach einem weiteren Ausgestaltungsmerkmal der Erfindung sowohl die Kulisse als auch die Führungsnut an zwei einander diametral gegenüberliegenden Stellen von Büchse und Auslösehülse angeordnet, wobei der Kulissenstein aus zwei an dem Führungsabschnitt des Riegelzapfens angeordneten, die Kulissen durchgreifenden und in die Führungsnuten einragenden Führungszapfen gebildet ist. Eine entfernt vom Verriegelungsmechanismus angeordnete Betätigungseinrichtung für die Entsperrung des Riegelzapfens läßt sich erzielen, indem die Auslösehülse einen Anschlußdaumen zur Befestigung eines Zugmittels, wie Bowdenzug, zur Einleitung einer Drehbewegung in die Auslösehülse aufweist.

Da bei unbetätigter Auslösehülse infolge der Federbeaufschlagung des Riegelzapfens in Sperrichtung dieser Riegelzapfen aus der Büchse vorragt, ist es für die Rückschwenkbewegung der Rückenlehne aus ihrer Vorklapplage vorteilhaft, wenn in den Schwenkweg des Riegelzapfens am Sitz eine mit einer Schrägfläche versehene Einführkufe einragt. Dadurch ist gewährleistet, daß bei unbetätigter Auslösehülse die Rückschwenkbewegung so weit fortgeführt werden kann, bis der Riegelzapfen in der Lage ist, in seine dem Sitzteil zugehörige Riegelaufnahme einzufallen. Obschon es denkbar ist, die Einführkufe und die Riegelaufnahme an dem Rahmen des Sitzteiles unmittelbar anzuordnen, mag es aus fertigungstechnischen Gründen vorteilhaft sein, wenn die Lagerlasche zusammen mit einem die Riegelaufnahme einerseits und die Einführkufe andererseits aufweisenden Riegelblech fest mit dem Sitzteil verbunden sind. Damit am Ende der Rückklappbewegung einerseits eine sichere Zuordnung des Riegelzapfens zur Riegelaufnahme möglich ist, und andererseits eine 3-Punkt-Verspannung der Drehlasche gegenüber dem Sitzteil ermöglicht wird, weist das Riegelblech vorteilhaft unterhalb seiner Riegelaufnahme einen Anschlag für die Drehlasche und einen mit dieser verbundenen, die erste Drehachse enthaltenden Beschlagteil auf.

Die Erfindung ist in einem Ausführungsbeispiel auf der Zeichnung dargestellt und wird nachfolgend näher erläutert. Es zeigen:
- Fig. 1A: einen Sitz in schematischer Seitenansicht, mit einem zwischen Sitzteil und Rückenlehne angeordneten, erfindungsgemäßen Verstellbeschlag, wobei sich die Rückenlehne in einer Gebrauchslage für den Sitzbenutzer befindet,
- Fig. 1B: den aus Fig. 1A ersichtlichen Sitz in schematischer Seitenansicht, wobei die Rückenlehne in eine Tischpositionslage vorgeschwenkt ist,
- Fig. 2: den erfindungsgemäßen Verstellbeschlag in einer perspektivischen Ansicht schräg von hinten gesehen,
- Fig. 3: den ebenfalls in perspektivischer Ansicht analog Fig.2 dargestellten Verstellbeschlag, bei dem jedoch die Lagerlasche und die Auslösehülse abgenommen sind,
- Fig. 4: den aus Fig.2 ersichtlichen Verstellbeschlag in einer Seitenansicht auf seine Außenseite gesehen,
- Fig. 5: den aus Fig. 4 ersichtlichen Verstellbeschlag in einer Stirnansicht,
- Fig. 6: den aus Fig.4 ersichtlichen Verstellbeschlag in einem Schnitt nach der Linie VI-VI von Fig. 4,
- Fig. 7: den in Fig.4 dargestellten Verstellbeschlag in einer Seitenansicht auf seine Innenseite gesehen,
- Fig. 8A: den, einen Riegelzapfen aufnehmenden Bereich des Verstellbeschlages in Schnittdarstellung, der sich in seiner aus Fig. 1A ersichtlichen Lage befindet, wobei jedoch der Riegelzapfen in seiner Entriegelungsstellung dargestellt ist,
- Fig. 8B: den aus Fig. 8A ersichtlichen Verriegelungsbereich des Verstellbeschlages in einer ausgebrochenen Ansicht auf die Innenseite gesehen,
- Fig. 9A: die aus Fig. 8A ersichtliche Schnittdarstellung des Verriegelungsbereiches, bei welcher der Riegelzapfen in seiner in die Riegelaufnahme eingefallenen Position dargestellt ist,
- Fig. 9B: den aus Fig. 9A ersichtlichen Verriegelungsbereich in einer ausgebrochenen Ansicht auf die Innenseite des Verstellbeschlages gesehen,
- Fig. 10A: den aus Fig. 8A ersichtlichen und im Schnitt dargestellten Verriegelungsbereich des Verstellbeschlages, bei dem der Riegelbolzen so weit in der Riegelaufnahme platziert ist, daß sich eine Spielfreistellung des Systems ergibt,
- Fig. 10B: den aus Fig. 10A in der Riegelaufnahme befindlichen Riegelzapfen in einer ausgebrochenen Seitenansicht des Verstellbeschlages,
- Fig. 11A: den im Schnitt dargestellten Verriegelungsbereich analog der Fig. 10A, bei dem sich der Riegelzapfen in einer Toleranzen ausgleichenden spielfreistellenden Drehlage befindet,
- Fig. 11B: den in Fig. 11A dargestellten Riegelzapfen in einer ausgebrochenen Seitenansicht auf die Innenseite des Verstellbeschlages gesehen,
- Fig. 12: den aus Fig. 10B ersichtlichen in seiner spieleliminierenden Lage in der Riegelaufnahme angeordneten Riegelzapfen in einer gegenüber Fig. 10B vergrößerten Darstellung.

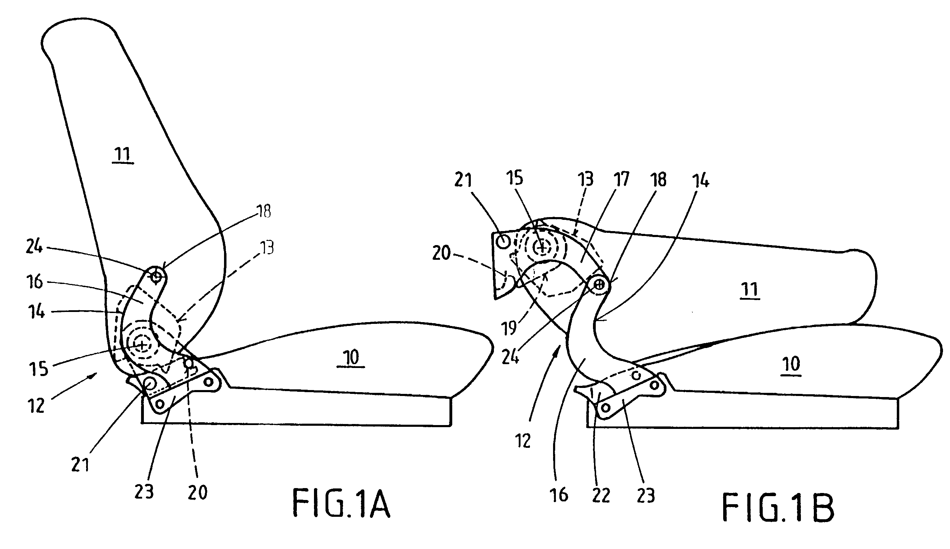

In Fig. 1A ist ein Fahrzeugsitz mit einem Sitzteil 10 und einer Rückenlehne 11 dargestellt, wobei sich die am Sitzteil 10 über einen Verstellbeschlag 12 befestigte Rückenlehne 11 in einer solchen Neigungslage befindet, daß der Sitz für den Sitzbenutzer einsitzbar ist. Dabei ist beispielsweise am Sitzrahmen des Sitzteiles 10 der aus zwei Beschlagkomponenten 13 und 14 bestehende Verstellbeschlag 12 auf jeder Sitzlängsseite befestigt. Mit der Beschlagkomponente 13 läßt sich die Neigungslage der Rückenlehne 11 gegenüber dem Sitzteil ein- und feststellen, wozu beispielsweise ein sogenannter "Taumelbeschlag" benutzt werden kann, der ein einfaches Planetengetriebe beinhaltet und dessen mit der Rückenlehne 11 verbundene Beschlagteil um eine erste Drehachse 15 selbsthemmend verschwenkt. Dieser auf beiden Sitzlängsseiten angeordneten ersten Beschlagkomponente 13 ist eine zweite Beschlagkomponente 14 nebengeordnet, die eine am Rahmen des Sitzteiles 10 festgelegte Lagerlasche 16 und eine damit über ein Gelenk 18 schwenkbare Drehlasche 17 aufweist. Diese in ihrem unteren Bereich verkröpfte Drehlasche 17 ist mit dem zum Sitzteil 10 gehörigen Beschlagteil 19 der Beschlagkomponente 13 fest verbunden. Der Beschlagteil 19 und die Drehlasche 17 sind in Gebrauchslage des Sitzes für einen Sitzbenutzer über eine Anschlagaufnahme 20 in Verbindung mit einem Anschlagzapfen eines Riegelbleches 22 und einem in dieses lösbar eingreifenden Riegelzapfen 21 verbunden. Das Riegelblech 22 ist seinerseits zusammen mit dem zurückspringenden Befestigungsbereich 23 der Lagerlasche 16 fest mit beispielsweise dem Rahmen des Sitzteiles 10 verbunden. Das die Lagerlasche 16 und die Drehlasche 17 miteinander verbindende Gelenk 18 weist eine externe, zweite Drehachse 24 der Beschlagkomponente 14 auf, um welche die Drehlasche 17 zusammen mit der in seiner Einstellage verbleibenden, ersten Beschlagkomponente 13 zusammen mit der Rückenlehne 11 derart verschwenkt werden kann, daß diese in eine Tischfunktionslage gelangt, wie sie aus der Fig. 1B zu entnehmen ist.

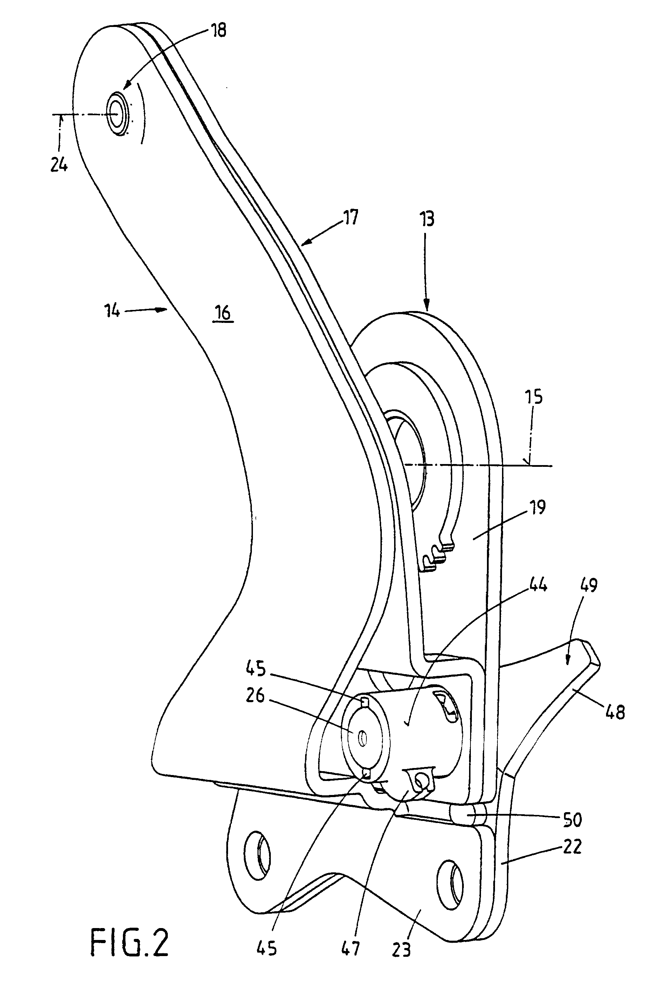

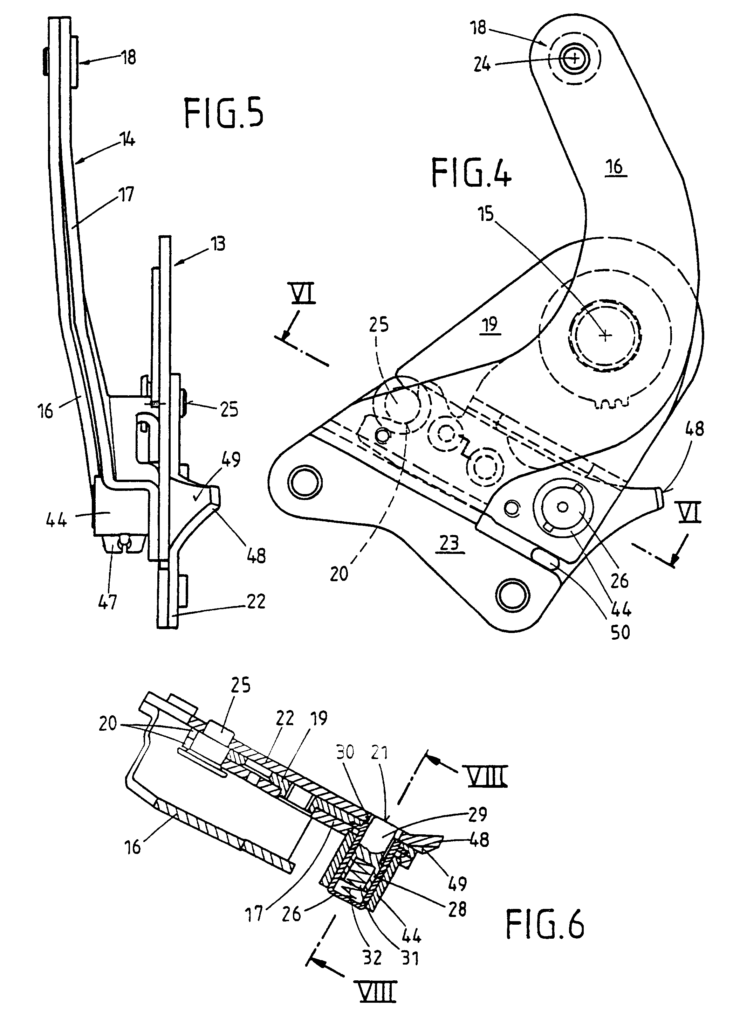

Bei dem aus den Fig. 1 bis 5 ersichtlichen Verstellbeschlag befindet sich diese zweite, externe Drehachse 24 bei der aus Fig. 1A ersichtlichen Sitzgebrauchslage in einem Abstand oberhalb der ersten Drehachse 15 der Beschlagskomponente 13, wobei dieser Abstand so gewählt ist, daß bei Überführung der Rückenlehne 11 in die aus Fig. 1B ersichtliche Tischlage die Aufpolsterung des Sitzteiles 10 und der Rückenlehne 11 sich nicht störend auf die Tischfunktionslage auswirkt.

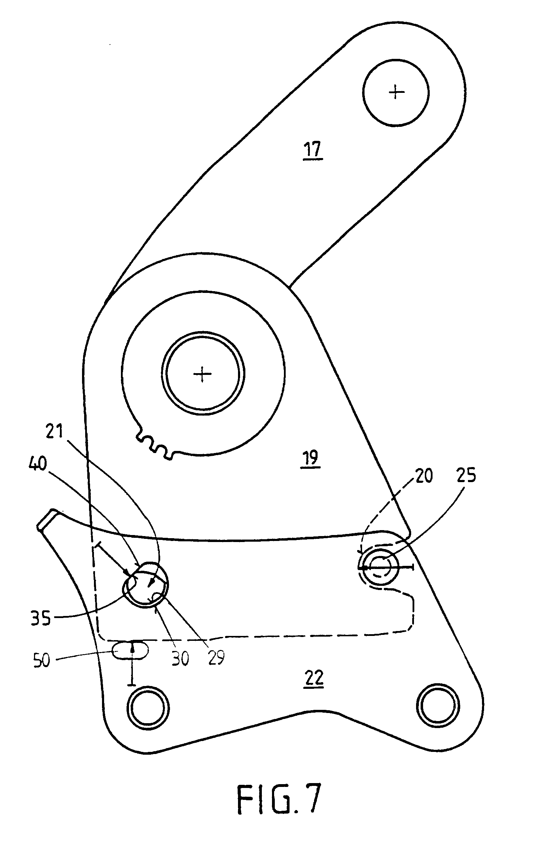

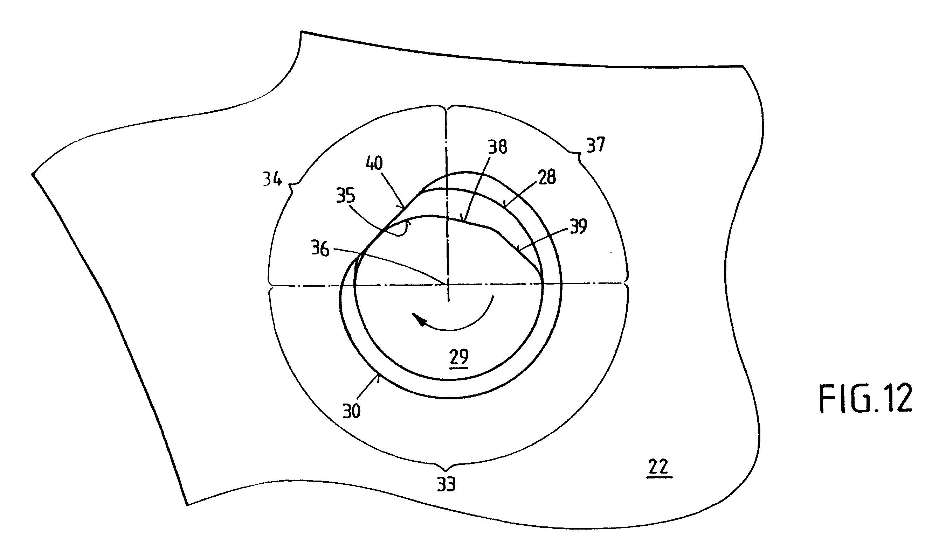

Zur Arretierung der Rückenlehne in einer das Linsitzen des Sitzbenutzers gestattenden Gebrauchslage weist die mit dem Beschlagteil 19 fest verbundene Drehlasche 17 ebenso wie der Beschlagteil 19 auf einer Seite eine Anschlagaufnahme 20 auf, mit der ein am Riegelblech 22 festgelegter Anschlagbolzen 25 bereichsweise umgriffen werden kann. Auf der der Anschlagaufnahme gegenüberliegenden Seite ist an der Drehlasche und dem damit verbundenen Beschlagteil 19 eine Büchse 26 fest verbunden, in welcher ein Riegelzapfen 21 mit seinem Führungsabschnitt 28 axial verschiebbar gelagert ist. An den Führungsabschnitt 28 schließt sich ein Sperrabschnitt 29 des Riegelzapfens 21 an, der in eine Riegelaufnahme 30 des Riegelblechs 22 eingreifen kann. Der Führungsabschnitt 28 des Riegelzapfens 21 weist eine hohlzylindrische Ausnehmung 31 auf, die der Aufnahme einer Druckfeder 32 dient. Diese Druckfeder stützt sich mit einem Ende am Boden der Büchse 26 ab und beaufschlagt den Riegelzapfen 21 in Sperrichtung. Wie aus den Fig. 7, 8B - 11 Bund am deutlichsten aus Fig. 12 zu entnehmen ist, weist der Umfang des Sperrabschnitts 29 am Riegelzapfen 21 über einen Teilbereich 33 von etwa 180° einen konstanten Radius auf, an den sich ein Umfangsbereich 34 von etwa 90° anschließt, in welchem eine Stützkurve 35 verläuft, die ausgehend vom konstanten Radius einen ständig kleiner werdenden Radialabstand vom Zentrum 36 des Riegelzapfens 21 aufweist und in wenigstens einen ebenen Bereich 37 übergeht. Die Stützkurve 35 ist vorteilhaft als logarithmische Spirale ausgebildet, während der Ebenenbereich 37 aus zwei ebenen, dachförmig aneinanderstoßenden Teilebenen 38 und 39 besteht. Der Sperrabschnitt 29 des Riegelzapfens 21 ist im Sperrfall von einer Riegelaufnahme 30 umgriffen, die über einen weiteren Kreisumfangsbereich einen größeren Durchmesser aufweist als der Durchmesser des Riegelzapfens 21 groß ist. Dieser weite Kreisumfangsbereich der Riegelaufnahme 30 ist von einer Stützfläche 40 unterbrochen, die in einer geneigten Ebene verläuft, deren unter einem Winkel von 90° verlaufende Normale schräg zur Vorderseite des Sitzteiles 10 und nach unten gerichtet ist.

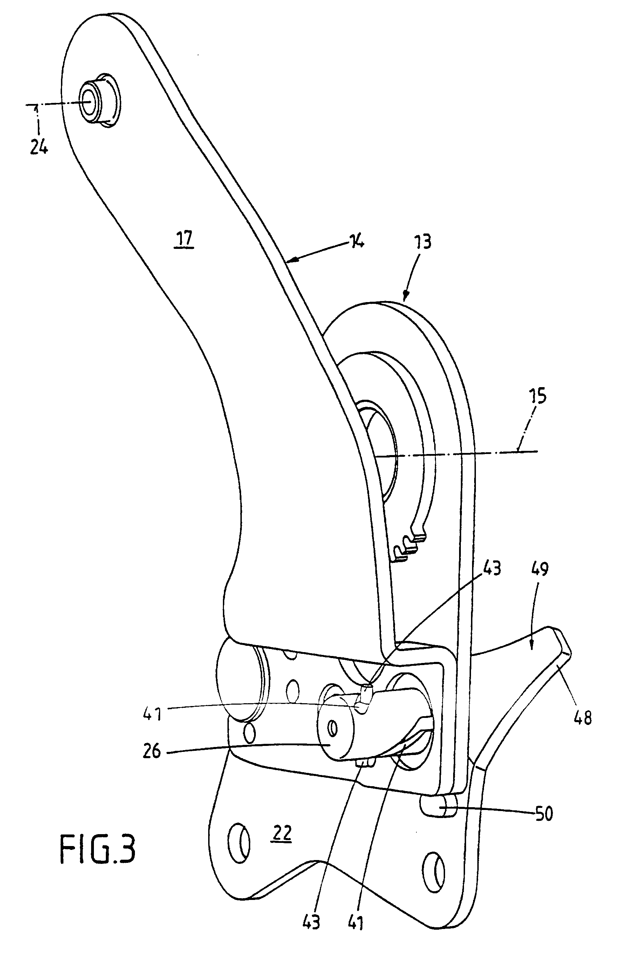

Um eine spielfreie Verspannung der Beschlagskomponente 14 gegenüber dem Sitzteil 10 ermöglichen zu können, ist eine Nachführung der Stützkurve infolge Verdrehung des Sperrschnitts 29 des Riegelzapfens 21 gegenüber der Stützfläche 40 am Riegelblech 22 erforderlich. Aus diesem Grund weist bei dem dargestellten Ausführungsbeispiel die Büchse 26 zwei einander diametral gegenüberliegend gewindeartig verlaufende Kulissen 41 auf, wie dies am deutlichsten aus den Fig. 3, 10A und 11A zu entnehmen ist. Die Kulisse 41 ist jeweils durch gewindeartige Schlitze im Zylindermantelbereich der Büchse 26 gebildet. In diese Kulisse 41 greifen als Kulissenstein 42 fungierende Führungszapfen 43 ein, und überragen diese nach außen hin, wie dies aus den Fig. 3 und 9A am deutlichsten zu entnehmen ist. Die Büchse 26 ist von einer Auslösehülse 44 umgriffen, die ebenfalls in axialer Richtung ansteigend verlaufende Führungsnuten 45 aufweist, in welche die aus der Kulisse 41 der Büchse 26 ausragenden Führungszapfen 43 einragen. Um während einer Drehbewegung der Auslösehülse 44 zu gewährleisten, daß diese infolge der Wirkung der Druckfeder 32 ständig an der Drehlasche 17 in Anlage bleibt, besitzen auch die Führungsnuten 45 einen ansteigenden Verlauf, dessen Steigung jedoch wesentlich größer ist als die Steigung der die Kulisse 41 bildenden Schlitze der Büchse 26. Die Auslösehülse 44 weist an ihrem Umfang einen Anschlußdaumen 47 auf, welcher als Angriffspunkt für ein Zugglied, beispielsweise in Form eines Bowdenzuges, dienen mag.

Um den aus der Büchse 26 und dem Beschlagteil 19 bei der Rückschwenkbewegung der Rückenlehne 11 ausragende Sperrabschnitt 29 des Riegelzapfens 21 ohne Betätigung der Auslösehülse 44 selbsttätig zurückzudrücken, weist das Riegelblech 22 eine durch Abbiegen eines Ansatzes gebildete Einführkufe 48 auf, die in den Schwenkweg des Riegelzapfens 21 einragt, und an ihrer dem Beschlagteil 19 zugekehrten Seite ein Schrägfläche 49 bildet, durch welche der Riegelzapfen 21 in der letzten Phase der Rückschwenkbewegung in die Büchse 26 gegen die Kraft der Druckfeder 32 zurückgedrückt wird. Unterhalb des Riegelzapfens 21 befindet sich bei in Verriegelungsstellung zurückgeführter Beschlagskomponente 14 ein Anschlag 50 am Riegelblech 22, gegen weichen die Unterseite von Drehlasche 17 und Beschlagteil 19 anliegt. Sowohl dieser Anschlag 50 als auch der Anschlagbolzen 25 nehmen im Verriegelungsfall Gegenkräfte der vom Sperrabschnitt 29 des Riegelzapfens 21 geäußerten Riegelkraft auf, was durch die in Fig. 7 eingezeichneten Pfeile veranschaulicht wird. Es ergibt sich somit eine sichere spielfreie 3-Punkt-Abstützung im Verriegelungsfall.

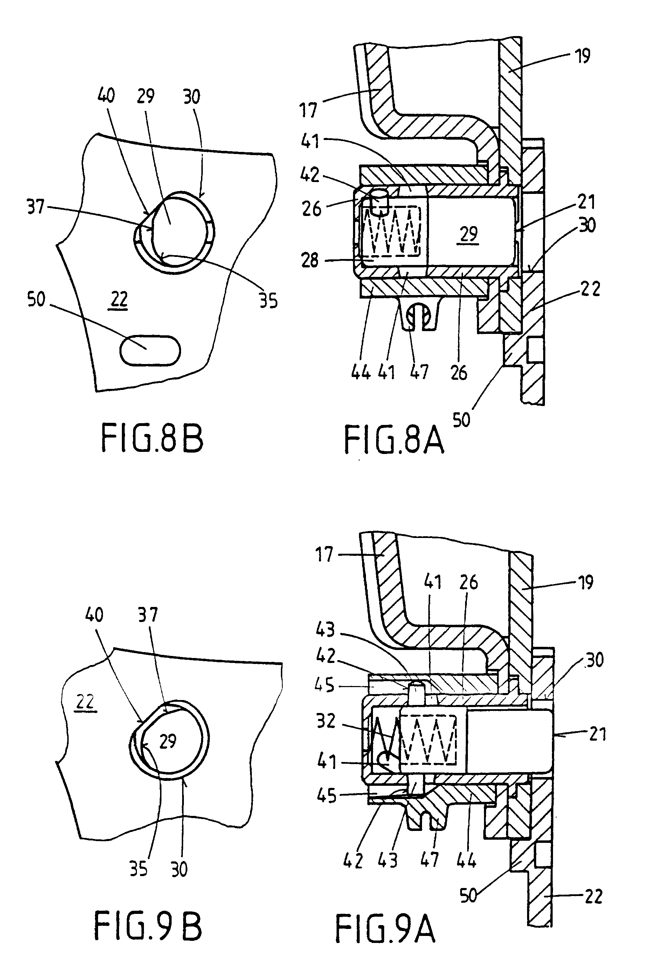

Zur Erläuterung der Verriegelungsfunktion sei von den Fig. 8A und 8B ausgegangen, in denen dargestellt ist, daß der Riegelzapfen 21 vollständig gegen die Kraft der ihn beaufschlagenden Druckfeder 32 vollständig in die Büchse 26 zurückgezogen ist, so daß seine Stirnfläche nicht über die Außenseite des Beschlagteiles 19 übersteht. In dieser Lage ist der Riegelzapfen 21 durch die Auslösehülse 44 überführt. Diese Entriegelungslage ist aus den Fig. 8A und 8B zu entnehmen.

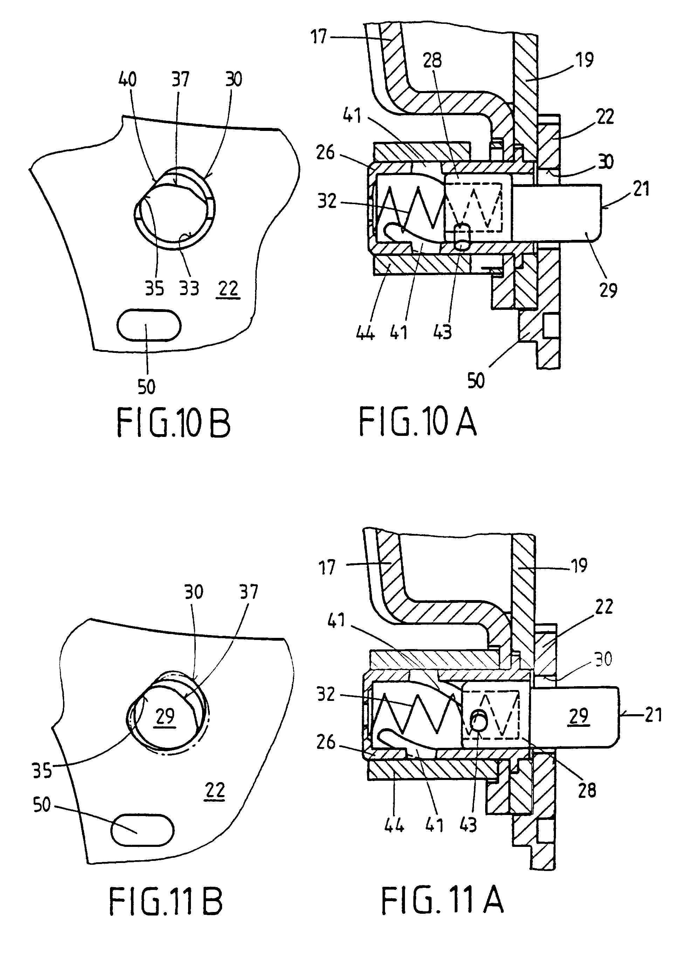

Wird nun die Auslösehülse 44 freigegeben, so wird über die Druckfeder 32 der Riegelzapfen 21 in die aus den Fig. 9A und 9B ersichtliche Lage überführt, wobei er in die Riegelaufnahme 30 des Riegelbleches 22 eingefallen ist. Dabei wurde der Riegelzapfen über seine Führungszapfen 43 durch die Kulisse 41 in die aus Fig. 9B ersichtliche Lage gedreht, bei der jedoch noch ein allseitiges Spiel zwischen dem Sperrabschnitt 29 des Riegelzapfens 21 und der Riegelaufnahme 30 besteht, wie dies insbesondere aus Fig. 9B zu entnehmen ist. Da jedoch die Druckfeder 32 weiterhin ihre Druckkraft äußert und den Riegelzapfen 21 weiter axial verschiebt, dreht sich dieser infolge der Kulisse 41 und der darin eingreifenden Führungszapfen 43 im Uhrzeigersinn gleichzeitig weiter, so daß schließlich die Stützkurve 35 in Anlage an der Stützfläche 40 der Riegelaufnahme 30 gelangt, wie dies aus Fig. 10B ersichtlich ist. In dieser Lage ist eine unter Spannung stehende Sperrung der Beschlagkomponente 14 am mit dem Sitzrahmen verbundenen Riegelblech 22 gegeben.

In den Fig. 11A und 11B ist ebenfalls die aus den vorhergehenden Fig. 10A und 10B ersichtliche Spannlage gegeben, bei der jedoch infolge anderer Toleranzlage der Riegelaufnahme 30 gegenüber der aus Fig. 10B ersichtlichen Stellung der Riegelzapfen 21 noch weiter vorgeschoben ist.

Wie bereits erwähnt, gibt das dargestellte und vorbeschriebene Ausführungsbeispiel den Erfindungsgegenstand nur beispielsweise wieder.

### Bezugszeichenliste :

- 10: Sitzteil
- 11: Rückenlehne
- 12: Verstellbeschlag
- 13: Beschlagkomponente
- 14: Beschlagkomponente
- 15: Drehachse, erste
- 16: Lagerlasche
- 17: Drehlasche
- 18: Gelenk
- 19: Beschlagteil
- 20: Anschlagaufnahme
- 21: Riegelzapfen
- 22: Riegelblech
- 23: Befestigungsbereich, an 16
- 24: Drehachse, zweite
- 25: Anschlagbolzen
- 26: Büchse
- 28: Führungsabschnitt, an 21
- 29: Sperrabschnitt, an 21
- 30: Riegelaufnahme
- 31: Ausnehmung, in 28
- 32: Druckfeder
- 33: Teilbereich, an 29
- 34: Umfangsbereich, an 29
- 35: Stützkurve, an 29
- 36: Zentrum, von 21
- 37: Ebenenbereich, an 29
- 38: Teilebene, von 37
- 39: Teilebene, von 37
- 40: Stützfläche, von 30
- 41: Kulisse, von 26
- 42: Kulissenstein, von 28
- 43: Führungszapfen
- 44: Auslösehülse
- 45: Führungsnut, von 44
- 47: Anschlußdaumen, an 44
- 48: Einführkufe, an 22
- 49: Schrägfläche, an 48
- 50: Anschlag, an 22

## Patentansprüche

1. Verstellbeschlag für die Rückenlehne (11) von Fahrzeugsitzen, insbesondere von Kraftfahrzeugsitzen, wobei die gegebenenfalls in ihrer Neigungslage mittels einer Stelleinrichtung um eine erste Drehachse (15) ein- und feststellbare Rückenlehne (11) um eine zweite, mit Abstand zur ersten Drehachse (15) angeordnete, externe Drehachse (24) vor- und rückklappbar ist, und in ihrer Rückklapplage an einer am Sitz ortsfest angeordneten Riegelaufnahme (30) mittels eines in diese lösbar eingreifenden und an einer mitklappenden Drehlasche (17) axial verschiebbar gehalterten und in Sperrrichtung federbeaufschlagten Riegelzapfens (21) gesichert und mit einer Anschlagaufnahme (20) an einem am Sitz ortsfest angeordneten Anschlagbolzen (25) abgestützt ist,
**dadurch gekennzeichnet,**
**daß** der axial verschiebbare Riegelzapfen (21) einen Führungsabschnitt (28) und einen Sperrabschnitt (29) aufweist, und an seinem Führungsabschnitt (28) außer seiner axialen Führung auch eine gesteuerte Drehbewegung erfährt, aufgrund dessen eine am Sperrabschnitt (29) radial veränderliche Stützkurve (35) an einer ebenen Stützfläche (40) der Riegelaufnahme (30) spieleliminierend abstützbar ist.

2. Verstellbeschlag nach Anspruch 1, **dadurch gekennzeichnet, daß** der Sperrabschnitt (29) des Riegelzapfens (21) einen Umfang aufweist, der über einen Teilbereich (33) von etwa 180° mit konstantem Radius verläuft, an den ein Ümfangsbereich von 90° anschließt, in welchem die Stützkurve (35) verläuft, die ausgehend vom konstanten Radius einen ständig kleiner werdenden Radialabstand vom Zentrum (36) des Riegelzapfens (21) aufweist und in wenigstens einen Ebenenbereich (37) übergeht, der an den Teilbereich (33) mit konstantem Radius anschließt, während die Riegelaufnahme (30) neben einem Kreisumfangsbereich eine mit der Stützkurve (35) in Kontakt bringbare Stützfläche (44) aufweist.

3. Verstellbeschlag nach Anspruch 2, **dadurch gekennzeichnet, daß** der Führungsabschnitt (28) des Riegelzapfens (21) in einer an der Drehlasche (17) festgelegten Büchse (26) axial verschiebbar angeordnet ist, und mit wenigstens einem Kulissenstein (42) in eine gewindeartig verlaufende Kulisse (41) der Büchse (26) eingreift.

4. Verstellbeschlag nach Anspruch 3, **dadurch gekennzeichnet, daß** die Büchse (26) von einer Auslösehülse (44) umgriffen ist, die wenigstens eine in axialer Richtung ansteigend verlaufende Führungsnut (45) aufweist, deren Steigung größer ist als die Steigung der gewindeartig verlaufenden Kulisse (41) in der Büchse (26), die vom Kulissenstein (42) durchgriffen ist, welcher Kulissenstein (42) in die Führungsnut (45) der Auslösehülse (44) eingreift.

5. Verstellbeschlag nach Anspruch 3 oder 4, **dadurch gekennzeichnet, daß** sowohl die Kulisse (41) als auch die Führungsnut (45) an zwei einander diametral gegenüberliegenden Stellen von Büchse (26) und Auslösehülse (44) angeordnet sind, und der Kulissenstein (42) aus zwei an dem Führungsabschnitt (28) des Riegelzapfens (21) angeordneten, die Kulissen (41) durchgreifenden und in die Führungsnuten (45) einragenden Führungszapfen (43) gebildet ist.

6. Verstellbeschlag nach Anspruch 4 oder 5, **dadurch gekennzeichnet, daß** die Auslösehülse (44) einen Anschlußdaumen (47) zur Befestigung eines Zugmittels, wie Bowdenzug zur Einleitung einer Drehbewegung in die Auslösehülse (44) aufweist.

7. Verstellbeschlag nach einem der vorhergehenden Ansprüche, **dadurch gekennzeichnet, daß** in den Schwenkweg des Riegelzapfens (21) am Sitz eine mit einer Schrägfläche (49) versehene Einführkufe (48) einragt.

8. Verstellbeschlag nach einem der vorhergehenden Ansprüche, **dadurch gekennzeichnet, daß** die Lagerlasche (16) zusammen mit einem die Riegelaufnahme (30) einerseits und die Einführkufe (48) andererseits aufweisenden Riegelblech (22) fest mit dem Sitzteil verbunden sind.

9. Verstellbeschlag nach Anspruch 8, **dadurch gekennzeichnet, daß** das Riegelblech (22) unterhalb seiner Riegelaufnahme (30) einen Anschlag (50) für die Drehlasche (17) und einen mit dieser verbundenen, die erste Drehachse (15) enthaltenden Beschlagteil (19) aufweist.

## Claims

1. Adjuster fitting for the back rest (11) of vehicle seats, in particular of motor vehicle seats, wherein the back rest (11), which is optionally adjustable about a first axis of rotation (15) and lockable in its inclined position by means of a positioning device, is foldable forwards and back about a second, external axis of rotation (24) disposed at a distance from the first axis of rotation (15) and is secured in its folded-back position at a locking bar receiver (30) disposed in a fixed manner on the seat by means of a locking bar pin (21), which engages releasably into said locking bar receiver and is mounted in an axially displaceable manner on a co-folding rotary bracket (17) and spring-loaded in locking direction, and is supported by a stop receiver (20) against a stop bolt (25) disposed in a fixed manner on the seat,
**characterized in**
**that** the axially displaceable locking bar pin (21) comprises a guide portion (28) and a locking portion (29), and at its guide portion (28) in addition to its axial guidance also experiences a controlled rotary motion, as a result of which a radially variable support curve (35) on the locking portion (29) is supportable in a play-eliminating manner against a flat support surface (40) of the locking bar receiver (30).

2. Adjuster fitting according to claim 1, **characterized in that** the locking portion (29) of the locking bar pin (21) has a circumference, which extends with a constant radius over a sub-region (33) of approximately 180°, which is adjoined by a circumferential region of 90°, in which extends the support curve (35), which starting from the constant radius is at a continuously decreasing radial distance from the centre (36) of the locking bar pin (21) and runs into at least one planar region (37), which adjoins the sub-region (33) with a constant radius, while the locking bar receiver (30) in addition to a circular circumferential region comprises a support surface (44) bringable into contact with the support curve (35).

3. Adjuster fitting according to claim 2, **characterized in that** the guide portion (28) of the locking bar pin (21) is disposed in an axially displaceable manner in a bush (26) fastened to the rotary bracket (17), and engages with at least one sliding block (42) into a thread-like gate (41) of the bush (26).

4. Adjuster fitting according to claim 3, **characterized in that** the bush (26) is embraced by a release sleeve (44), which has at least one guide groove (45), which extends in an axially ascending manner and the gradient of which is greater than the gradient of the thread-like gate (41) in the bush (26), which is penetrated by the sliding block (42), which sliding block (42) engages into the guide groove (45) of the release sleeve (44).

5. Adjuster fitting according to claim 3 or 4, **characterized in that** both the gate (41) and the guide groove (45) are disposed at two mutually diametrically opposite points of bush (26) and release sleeve (44), and the sliding block (42) is formed by two guide pins (43), which are disposed on the guide portion (28) of the locking bar pin (21) and penetrate the gates (41) and project into the guide grooves (45).

6. Adjuster fitting according to claim 4 or 5, **characterized in that** the release sleeve (44) has a connecting tappet (47) for the fastening of a pulling means, such as a Bowden cable, for introducing a rotary motion into the release sleeve (44).

7. Adjuster fitting according to one of the preceding claims, **characterized in that** a lead-in runner (48) provided with a sloping surface (49) projects into the swivelling path of the locking bar pin (21) on the seat.

8. Adjuster fitting according to one of the preceding claims, **characterized in that** the bearing bracket (16) together with a locking bar plate (22), which comprises the locking bar receiver (30) on the one hand and the lead-in runner (48) on the other hand, are firmly connected to the seat part.

9. Adjuster fitting according to claim 8, **characterized in that** the locking bar plate (22) has, below its locking bar receiver (30), a stop (50) for the rotary bracket (17) as well as a fitting part (19) connected to the latter and comprising the first axis of rotation (15).

## Revendications

1. Ferrure de réglage pour le dossier (11) de sièges de véhicules en particulier de sièges de véhicule automobile, le dossier (11), susceptible d'être réglé et fixé le cas échéant, quant à sa position d'inclinaison, autour d'un premier axe de rotation (15), à l'aide d'un dispositif de réglage, étant susceptible d'être basculé vers l'avant et vers l'arrière autour d'un deuxième axe de rotation (24) externe, disposé à distance du premier axe de rotation (15) et d'être assuré à sa position rabattue vers l'arrière, sur un logement de verrou (30), disposé de façon localement fixe sur le siège, au moyen d'un tourillon de verrouillage (21) s'engageant dans celui-ci de façon désolidarisable et maintenu de façon axialement déplaçable sur une patte de rotation (17) basculant conjointement, et sollicité par un effet élastique dans la diffaction du blocage, et le dossier étant soutenu, à l'aide d'un logement de butée (20), sur un boulon de butée (25) disposé de façon localement fixe sur le siège,
**caractérisé en ce que**
le tourillon de verrouillage (21), déplaçable axialement, présente un tronçon de guidage (28) et un tronçon de blocage (29) et, sur son tronçon de guidage (28), subit, outre son guidage axial, également un mouvement rotatif commandé, sur la base duquel une came d'appui (35), modifiable radialement sur le tronçon de blocage (29), peut prendre appui, avec élimination du jeu, sur une face d'appui (40) plane du logement de verrou (30).

2. Ferrure de réglage selon la revendication 1, **caractérisé en ce que** le tronçon de blocage (29) du tourillon de verrouillage (21) présente une périphérie s'étendant avec un rayon constant sur une zone partielle (33) d'environ 180°, périphérie à laquelle se raccorde une zone de 90° dans laquelle la came d'appui (35) s'étend, qui, en partant d'un rayon constant, présente un espacement radial qui diminue constamment, par rapport au centre (36) du tourillon de verrouillage (21), et se transforme en au moins une zone plane (37) se raccordant avec un rayon constant à la zone partielle (33), tandis que le logement de verrou (30) présente, outre une zone circulaire, une face d'appui (44) susceptible d'être mise en contact avec la came d'appui (35).

3. Ferrure de réglage selon la revendication 2, **caractérisé en ce que** le tronçon de guidage (28) du tourillon de verrouillage (21) est disposé de façon déplaçable axialement dans une douille (26) fixée sur la patte de rotation (17) et s'engage, par au moins un patin de coulisse (42), dans une coulisse (41), s'étendant à la façon d'un filetage, de la douille (26).

4. Ferrure de réglage selon la revendication 3, **caractérisé en ce que** la douille (26) est entourée par un manchon de déclenchement (44) présentant au moins une rainure de guidage (45) s'étendant en montant en direction axiale, dont le pas est supérieur au pas de la coulisse (41) s'étendant à la façon d'un filetage dans la douille (26), qui est traversée par le patin de coulisse (42), le patin de coulisse (42) s'engageant dans la rainure de guidage (45) du manchon de déclenchement (44).

5. Ferrure de réglage selon la revendication 3 ou 4, **caractérisé en ce que**, tant la coulisse (41), qu'également la rainure de guidage (45), sont disposées en deux emplacements, diamétralement opposés l'un à l'autre, de la douille (26) et du manchon de déclenchement (44), et le patin de coulisse (42) est formé de deux tourillons de guidage (43), disposés sur le tronçon de guidage (28) du tourillon de verrou (21), traversant des coulisses (41) et pénétrant dans les rainures de guidage (45).

6. Ferrure de réglage selon la revendication 4 ou 5, **caractérisé en ce que** le manchon de déclenchement (44) présente une came de raccordement (47) pour la fixation d'un moyen de traction, tel qu'un câble de Bowden, pour introduire un mouvement rotatif dans le manchon de déclenchement (44).

7. Ferrure de réglage selon l'une des revendications précédentes, **caractérisé en ce qu'**un patin d'insertion (48), muni d'une face oblique (49), pénètre dans la course de pivotement du tourillon de verrouillage (21) sur le siège.

8. Ferrure de réglage selon l'une des revendications précédentes, **caractérisé en ce que** la patte de palier (16), conjointement avec une tôle de verrouillage (22), présentant le logement de verrou (30), d'une part, et le patin d'insertion (48), d'autre part, sont reliées rigidement à la partie d'assise.

9. Ferrure de réglage selon la revendication 8, **caractérisé en ce que** la tôle de verrouillage (22) présente, au-dessous de son logement de verrou (30), une butée (50) pour la patte de rotation (17) et une partie de ferrure (19), reliée à celle-ci, contenant le premier axe de rotation (15).
